# EUROPÄISCHE PATENTANMELDUNG

(11) **EP 1 300 499 A1**
(43) Veröffentlichungstag der Anmeldung: **09.04.2003**
(21) Anmeldenummer: 02021162.9
(22) Anmeldetag: 24.09.2002
(51) Int. Cl.: D04H 18/00, D04H 1/66, D04H 1/72, B32B 9/00, D04H 1/46

(54) **Dämmstoff-Matte auf der Basis von Hanf-Fasern sowie Verfahren und Anlage zu deren Herstellung**

(30) Priorität: 29.09.2001 DE 10148376
(71) Anmelder: Piechatzek, Günter Alois, 06847 Dessau (DE)
(72) Erfinder: Piechatzek, Günter Alois, 06847 Dessau (DE)
(74) Vertreter: Tragsdorf, Bodo, Dipl.-Ing.

(57) **Zusammenfassung**

Die Erfindung betrifft eine Dämmstoff-Matte auf der Basis von Hanf-Fasern, ein Verfahren zur Herstellung der Hanf-Dämmstoff-Matten und die dazugehörige Anlage. Ausgehend von den Nachteilen des bekannten Standes der Technik soll eine Dämmstoff-Matte geschaffen werden, die sich durch verbesserte Isolationseigenschaften auszeichnet, eine ausreichende innere Stabilität besitzt und die im Bauwesen gestellten Anforderungen an ein Dämmmaterial erfüllt.

Als Lösung wird einem Dämmstoff-Matte vorgeschlagen, die aus Hanf-Fasern 1 mit einer Länge von ca. 80 bis 130 mm und einer Dicke von 50 bis 120 µm besteht, die an ihren Enden aufgespleißt sind. In dem Vlies 2 sind in vertikalen Achsen der Gitterpunkte eines Raumgitters liegende Hanf-Faser-Kreuzungspunkte 4 und Hanf-Fasern mittels eines biologisch abbaubaren kautschukelastischen Copolymeren in Form von Verbindungselementen 6 verbunden. Die Dämmstoff-Matte besitzt eine Dicke von mindestens 40 mm sowie eine Vliesdichte von 45 bis 60 kg/m³.

## Beschreibung

Die Erfindung betrifft eine Dämmstoff-Matte auf der Basis von Hanf-Fasern, ein Verfahren zur Herstellung der Hanf-Dämmstoff-Matten und die dazugehörige Anlage.

Die Herstellung von Dämmstoff-Matten aus Hanf-Fasern zur Wärmedämmung und/oder Schallisolierung ist bereits bekannt.
In der DE 43 17 239 A1 ist eine Isoliermatte beschrieben, die aus einer Umhüllung, z.B. aus Naturfasergewebe oder Kunststoffgewebe, besteht, die mit einem Brandschutzmittel behandelt oder ausgerüstet ist. Die Umhüllung wird als endloser Schlauch hergestellt und mit Füllmaterial, z.B. Hanf, verfüllt und in an sich bekannter Weise vernäht. Aus dem Füllmaterial können auch feste Platten hergestellt werden, wobei das Füllmaterial mit einem Bindemittel, z.B. Latex, verklebt wird. Die vorgenannte Umhüllung dient dabei als Kaschierung.
Aus der DE 197 55 070 A1 ist ein Dämmmaterial bekannt, das aus einer Papierschicht, einer Klebstoffschicht, einer Hanfschicht und gegebenenfalls einer Aluminiumschicht besteht. Die Hanfschicht kann als Vlies, z.B. als Naßvlies oder Wirrfaservlies ausgebildet sein. Zur Bildung der Klebstoffschicht wird ein Heiß- oder Kaltkleber eingesetzt. Die Papierbahn wird mit einem Heiß- oder Kaltkleber beschichtet und mit einer Hanfvliesbahn zusammengeführt und der so gebildete Schichtverbund anschließend gekühlt bzw. getrocknet. Das eingesetzte Hanfvlies weist eine Dicke von 3 bis 23 mm und ein Flächengewicht von 0,5 bis 1,5 kg/m² auf.
Bekannt ist auch eine Isoliermatte, die aus Hanf-Werg (bei der Hanf-Spinnerei anfallende Abfallfasern) und Beimengungen von Zellulose, Altpapier, Hobelspänen oder recycelbarem Verbundverpackungsmaterial besteht und durch Abfüllen dieser Materialien in ein schlauchartiges Netzwerk erhalten wird (DE 198 00 685 A1).
Der Nachteil der vorgenannten Dämmstoff-Matten besteht darin, daß diese nur ungenügende Wärme- und Schalldämmeigenschaften besitzen. Weiterhin ist davon auszugehen, daß im Altpapier unerwünschte Stoffe enthalten sind, die das Wohnraum-Klima nachteilig beeinflussen können und das Setzungsverhalten, besonders bei Verwendung von Altpapier, langfristig nicht gewährleistet werden kann.
In der DE 198 46 704 A1 ist eine Dämmstoff-Matte beschrieben, die aus im Wesentlichen ungerösteten Hanf-Faser-Produkten, nämlich aus einem Gemisch von Langfaser, Kurzfaser und Schäben besteht und beidseitig mit einer Kaschierung versehen ist. Die Naturpflanze Hanf wird dabei direkt als Grünfaser eingesetzt, die in einer aerodynamischen Wirrfaser-Anlage ohne Kardierung aufgeschlossen wird. Die einzelnen Gemischbestandteile sind noch ineinander verhakt und bilden eine Wirrlage. Die bevorzugt aus Papier bestehende doppelseitige Kaschierung ist mittels eines Klebstoffes mit der Hanf-Faser-Wirrlage verbunden und zusätzlich durch Steppnähte oder Nietverbindungen gesichert.
Der Schäbenanteil und die zusätzlichen Verbindungsmittel wie Steppnähte und Nietverbindungen sind bei dieser Dämmstoff-Matte von Nachteil. Mit einem Schäbenanteil ist im Verlauf von Transport und Montage eine Beschädigung der Papier-Kaschierung nicht auszuschließen. Ebenso ist ein Schneiden der Dämmstoff-Matte zum Anpassen an die örtliche Bausituation durch den Schäbenanteil erheblich beeinträchtigt. Weiterhin können durchtrennte Steppnähte oder Nietverbindungen zum Auseinanderfallen der gesamten Dämmstoff-Matte führen.
Entscheidend für eine wirksame Isolierung ist eine gute Luftkammerung bzw. ein stabiles Porenvolumen zwischen den Hanf-Fasern. Schäben, Steppnähte und Niete beeinträchtigen ein gleichmäßiges Faservlies für das erforderliche Porenvolumen zur Gewährleistung von Wärme- und Schalldämmeffekt.

Der Erfindung liegt die Aufgabe zugrunde, eine Dämmstoff-Matte zu schaffen, die sich durch verbesserte Isolationseigenschaften auszeichnet, eine ausreichende innere Stabilität besitzt, deren Vlies biologisch abbaubar ist und die im Bauwesen gestellten Anforderungen an ein Dämmmaterial erfüllt. Ferner sollen ein geeignetes Verfahren zur Herstellung der Dämmstoff-Matte und die dazugehörige Anlage geschaffen werden.

Erfindungsgemäß wird die Aufgabe durch die im Anspruch 1 angegebenen Merkmale gelöst. Geeignete Ausgestaltungen der Dämmstoff-Matte sind Gegenstand der Ansprüche 2 bis 11. Das Verfahren zur Herstellung der Dämmstoff-Matte ist in Anspruch 12 definiert. Weiterbildungen der Verfahrensweise sind in den Ansprüchen 13 bis 18 angegeben. Eine geeignete Anlage zur Durchführung des Verfahrens ist Gegenstand des Anspruches 19. Die Ansprüche 20 und 21 betreffen geeignete Weiterbildungen der Anlage gemäß Anspruch 19.
Die vorgeschlagene Dämmstoff-Matte besteht aus Hanf-Fasern mit einer Länge von 80 bis 130 mm und einer Dicke von 50 µm bis 120 µm, wobei die Enden der Hanffasern aufgespleißt sind. Aus diesen Hanf-Fasern wird ein Vlies aus wahllos zueinander gerichteten Fasern mit konstanter Volumendichte gebildet. Die Vliesbildung erfolgt im Trockenverfahren durch Krempeln oder durch Luftlegung.

Durch das Aufspleißen der Faserenden bei vergleichsweise dicker Faser zu ansonsten dünneren Fasern bei herkömmlichen Dämmstoffen wird in dem so gebildeten Vlies eine Verringerung der Binnenkonvektion des Dämmstoffes erzielt.
Die Hanf-Fasern des Vlieses liegen in Wirr- oder Kreuzlage vor, wodurch eine Vielzahl an Hanf-Faser-Kreuzungspunkten gebildet sind. Die Dämmstoff-Matte zeichnet sich dadurch aus, daß in dem Vlies die aus dem Copolymer bestehenden Verbindungselemente in vertikalen Achsen der Gitterpunkte eines Raumgitters liegen und in bzw. auf diesen Achsen liegende Hanf-Faser-Kreuzungspunkte bzw. Hanf-Fasern umschließen. Die entsprechenden Achsen befinden sich in vertikaler Richtung zur Kaschierung. Dadurch wird gewährleistet, daß eine ausreichende Anzahl an Hanf-Faser-Kreuzungspunkten durch das elastische Copolymer formschlüssig dauerhaft fixiert ist, um sicherzustellen, daß während des Transportes und dem Einsatz der Dämmstoff-Matten sich das Porenvolumen nicht wesentlich verändert und die erforderliche Stabilität der Matte gewährleistet ist. Die zur Verfestigung der Hanf-Faser-Kreuzungspunkte eingesetzte Copolymer-Dispersion besteht z.B. im Wesentlichen aus 25 Gew.-% Butadien, 25 Gew.-% Styrol und 50 Gew.-% Wasser. Das wässrige Copolymer verfestigt sich relativ schnell bei Raumtemperatur und vulkanisiert nach der Verdunstung des Wassers während des Trocknungsprozesses der Dämmstoff-Matte zu einem Elastomer. Durch eine Veränderung des Butadien-Anteils kann die Viskosität der Copolymer-Dispersion unterschiedlich eingestellt werden.
Die Verfestigung des Vlieses an bestimmten Hanf-Faser-Kreuzungspunkten verleiht der Dämmstoff-Matte verbesserte anwendungstechnische Eigenschaften. Diese bestehen vor allem in einer erhöhten elastischen Verformbarkeit bei Biege-, Zug- und Kompressions-Beanspruchung. Von wesentlichem Vorteil für den Einsatz der

Dämmstoff-Matte ist, daß das gewünschte große Porenvolumen während des Transportes und der Lagerung der Dämmstoff-Matten erhalten bleibt und dadurch der sehr gute Wärmeisoliereffekt nicht nachteilig beeinflußt wird. Die Verbindungselemente können entweder als in etwa senkrechter Richtung zur Kaschierung angeordnete dünne Fäden oder als einzelne, vorzugsweise kugelförmige, Verfestigungspartikel ausgebildet sein. Die Fäden sind in definierten Abständen in Längs- und Querrichtung des Vlieses angeordnet und bilden dabei die vertikalen Achsen der Gitterpunkte eines Raumgitters. Dadurch erhält das Vlies einen stützgerüstähnlichen inneren Aufbau, der der Dämmstoff-Matte eine noch höhere mechanische Belastbarkeit verleiht, ohne nachteilige Auswirkungen auf das für die guten Isoliereigenschaften erforderliche Porenvolumen. Außerdem besitzt diese Dämmstoff-Matte ein definiertes Rückstellvermögen. Die Abstände zwischen den Fäden sollten im Bereich von 40 bis 60 mm liegen. Die Fäden beginnen kurz oberhalb der Kaschierung und reichen bis kurz unterhalb der Oberseite des Vlieses, vorzugsweise jeweils in einem Abstand von 5 mm zur Ober- bzw. Unterseite des Vlieses. Es ist auch möglich, die Fäden mit der unteren Kaschierung zu verbinden, wodurch eine feste Verbindung zwischen dem Vlies und der Kaschierung erreicht werden kann. Der Auftrag einer zusätzlichen Klebstoffschicht zur Verbindung des Vlieses mit der Kaschierung kann dann entfallen.
In bestimmten Anwendungsfällen kann es auch ausreichend sein, in dem Vlies nur Verfestigungspartikel als Verbindungselemente zu bilden. Diese sind dann in definierten Abständen in Längs- und Querrichtung sowie in der Höhe angeordnet, als Gitterpunkte eines Raumgitters. Die Dämmstoff-Matten enthalten selbstverständlich kein körperliches Raumgitter. Der Begriff "Raumgitter" dient lediglich zur näheren Umschreibung der Lage und Anordnung der Verbindungselemente.
Durch die zum Elastomer vulkanisierte Copolymer-Dispersion werden die Hanf-Fasern im Vlies formschlüssig bzw. adhäsiv untereinander verbunden. Der Anteil der adhäsiv wirkenden Komponenten Butadien und Styrol beträgt 10 % bis 20 % Massenanteile bezogen auf die Massenanteile an Fasern im Vlies. Zur Bildung von dünnen Fäden wird mit einer Copolymer-Dispersion mit einem höheren Butadien-Anteil, im Bereich von 30 bis 50 Gew.-% gearbeitet.
Die Dämmstoff-Matte weist eine Dicke von mindestens 40 mm auf und besitzt eine Vliesdichte von 45 bis 60 kg/m³. Die Dämmstoff-Matte kann erforderlichenfalls noch mit einer flammhemmenden Ausrüstung und/oder gegen einen biologischen Schädlingsbefall geschützt werden, z.B. durch den Zusatz leichter Soda, die zusammen mit der Copolymer-Dispersion in das Vlies eingebracht wird.
Zur Herstellung der erfindungsgemäßen Dämmstoff-Matte sind folgende Verfahrensschritte vorgesehen:
a) als Ausgangsmaterial dienende, an ihren Enden aufgespleißte technische Hanf-Fasern mit einer Länge von 80 bis 130 mm und einer Dicke von 50 bis 120 µm werden gereinigt, wobei Fremdstoffe, Staub und Schäben, entfernt werden,
b) anschließend werden die Hanf-Fasern durch mechanische oder aerodynamische Verwirbelung zu einem in Wirr- oder Kreuzlage bestehende Vlies mit einer Dicke von 40 bis 200 mm weiterverarbeitet und auf das gewünschte Breitenmaß zugeschnitten,
c) das Vlies wird auf einer Kaschierung abgelegt und zusammen mit dieser in Transportrichtung bewegt,
d) mittels mindestens einer taktweise arbeitenden, oberhalb des Vlieses angeordneten Copolymer-Dispersions-Verteilereinrichtung mit mindestens in einer Reihe, quer zur Transportrichtung des Vlieses, vertikal nach unten gerichteten, in gleichem Abstand zueinander angeordneten, in das Vlies eintauchbaren Düsennadeln werden Hanf-Faser-Kreuzungspunkte und Hanf-Fasern durch Austrag einer definierten Copolymer-Dispersionsmenge verfestigt und
e) danach wird die Dämmstoffendlosbahn einer Trockeneinrichtung zugeführt, um das noch vorhandene Wasser aus der Copolymer-Dispersion zu entfernen, damit die eingetragene Copolymer-Dispersion zu einem Elastomer vulkanisiert, und abschließend besäumt, geschnitten und konfektioniert.

Die Copolymer-Dispersions-Verteilereinrichtung arbeitet zyklusweise und ist in ihrem Bewegungsablauf auf die Transportbewegung des einseitig kaschierten Vlieses abgestimmt, die kontinuierlich oder taktweise erfolgen kann. Bei einer kontinuierlichen Transportbewegung des Vlieses wird zur Bildung der entsprechenden Verbindungselemente an den Hanf-Faser-Kreuzungspunkten die Verteilereinrichtung mit den Düsennadeln nach unten und gleichzeitig mit der Transportgeschwindigkeit des Vlieses in Transportrichtung bewegt und dabei werden die Düsennadeln in das Vlies, bis kurz vor einer Berührung mit der Kaschierung, getaucht. In dieser Stellung beginnt der Austrag der Copolymer-Dispersion und die Verteilereinrichtung mit den Düsennadeln wird wieder nach oben bewegt. Wenn sich die Öffnungen der Düsennadeln in der Stellung kurz vor Erreichen der Oberkante des Vlieses befinden, wird der Austrag der Copolymer-Dispersion unterbrochen, und die Verteilereinrichtung wird wieder zurück in die Ausgangslage bewegt, um anschließend mit dem nächsten Zyklus zu beginnen.
Die Eintauchbewegungen der Düsennadeln in das Vlies erfolgen mit hoher Geschwindigkeit und die Geschwindigkeit der Auftauchbewegungen wird in Abhängigkeit von der auszutragenden Dispersionsmenge gesteuert.
Sollen fadenförmige Verbindungselemente gebildet werden, so wird der Austrag der Copolymer-Dispersion aus den Düsennadeln während der Bewegung der Düsennadeln nach oben, bis zur Oberseite des Vlieses, nicht unterbrochen. Zur Bildung von einzelnen Verfestigungspartikeln ist es jedoch erforderlich, den Austrag der Copolymer-Dispersion mehrmals kurz zu unterbrechen, jeweils in Abhängigkeit vom Abstand der zu setzenden Verfestigungspartikel. Die einzelnen Verfestigungspartikel sind in dem Vlies wie Gitterpunkte eines Raumgitters angeordnet.
Die Dämmstoffmatte kann außer der unteren Kaschierung auch noch mit einer oberen Kaschierung ausgerüstet werden. Bevorzugterweise werden als Kaschierung biologisch abbaubare klebstoffbeschichtete Papierbahnen eingesetzt. Dadurch ist die Dämmstoff-Matte vollständig biologisch abbaubar.
Hinsichtlich weiterer Einzelheiten wird auf das nachfolgende Ausführungsbeispiel verwiesen.

Die Erfindung soll nachstehend an einem Ausführungsbeispiel näher erläutert werden. In der zugehörigen Zeichnung zeigen
- Fig. 1: eine Dämmstoff-Matte mit Verfestigungspartikeln als Verbindungselemente an Hanf-Faser-Kreuzungspunkten, in perspektivischer Darstellung,
- Fig. 2: eine Dämmstoff-Matte mit Fäden als Verbindungselemente an Hanf-Faser-Kreuzungspunkten, in perspektivischer Darstellung,
- Fig. 3: die Anlage zur Herstellung der Dämmstoff-Matten in vereinfachter schematischer Darstellung und

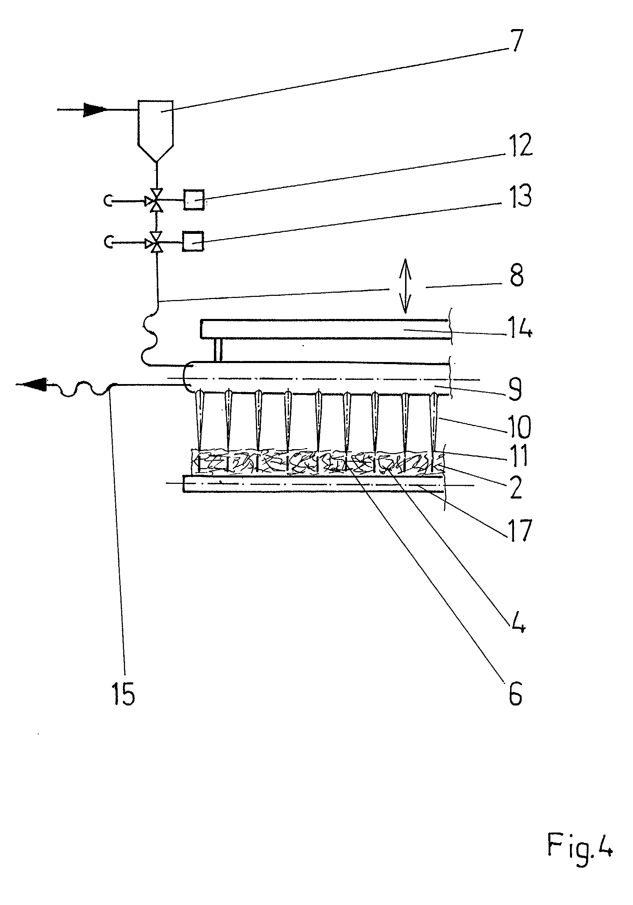

- Fig. 4: einen Schnitt gemäß der Linie A-A in Fig. 3.

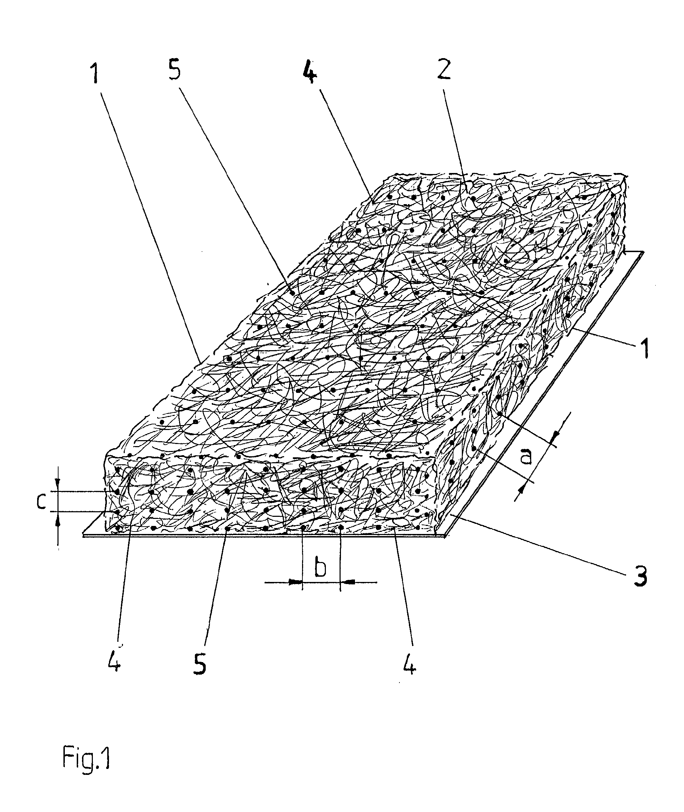

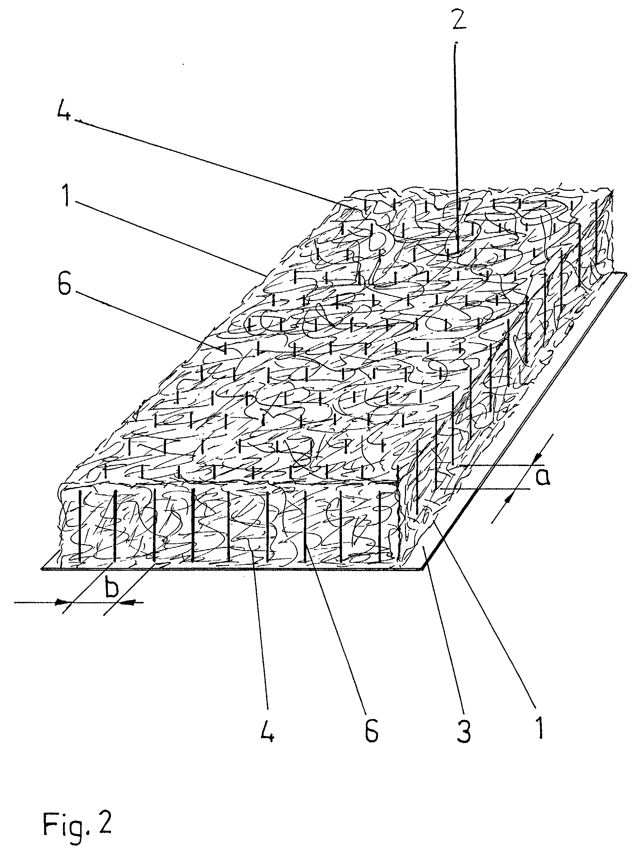

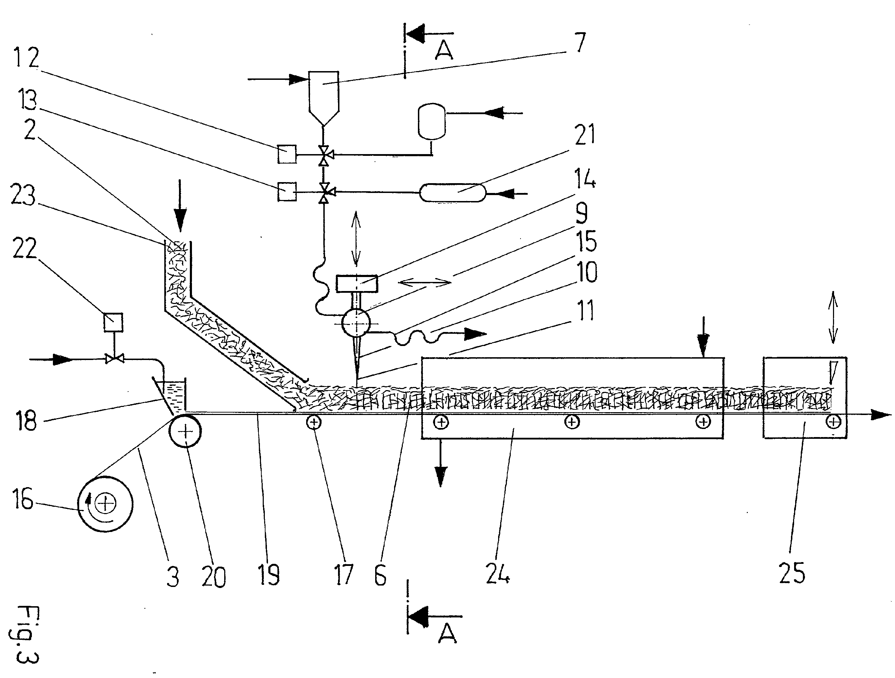

Die in den Figuren 1 und 2 gezeigte Dämmstoff-Matte besteht aus Hanf-Fasern 1 unterschiedlicher Länge, im Bereich von 80 bis 130 mm, mit einer Dicke von 50 bis 120 µm. Die einzelnen Hanf-Fasern 1 sind an ihren Enden aufgespleißt und durch Luftverwirbelung ist ein als Wirrlage ausgebildetes Vlies 2 mit einer durchschnittlichen Vliesdichte von ca. 50 kg/m³ entstanden. Die Vliesbildung kann entweder durch "Krempeln" oder "aerodynamische Verwirbelung" erfolgen. Die aerodynamische Verwirbelung bietet den Vorteil, daß ein Vlies erhalten wird, das in Längs- und in Querrichtung gleiche Eigenschaften hinsichtlich Faserorientierung, Verformbarkeit und Festigkeit besitzt. Das Vlies 2, das eine Dicke bzw. Höhe von 90 mm besitzt, ist mit einer unteren Kaschierung aus einer biologisch abbaubaren Papierbahn 3 versehen. Die eingesetzte Papierbahn 3 ist hierzu einseitig klebstoffbeschichtet. An mindestens einer der Längsseiten der Dämmstoff-Matte überragt die Papierbahn 3 das Vlies um einige cm. Dieser Rand dient beim Verlegen der Dämmstoff-Matten als Überlappung. Die verwirbelten Hanf-Fasern bilden untereinander Hanf-Faser-Kreuzungspunkte 4. Durch den gezielten Eintrag einer Copolymer-Dispersion sind eine bestimmte Anzahl an Hanf-Faser-Kreuzungspunkten 4 durch zusätzliche Verbindungselemente 5, 6 verfestigt. Nach dem Austreiben des Wassers aus der Copolymer-Dispersion vulkanisiert diese zu einem Elastomer. Die einzelnen Hanf-Faser-Kreuzungspunkte sind somit mittels elastischer Verbindungselemente 5, 6 formschlüssig verbunden. Eine Dämmstoff-Matte in der Abmessung l x b x h von 1200 mm x 800 mm x 90 mm ist mit ca. 3800 Verbindungselementen in Form von kugelförmigen Partikeln 5 oder mit ca. 380 dünnen Fäden 6 ausgerüstet. Bei der in der Fig. 1 gezeigten Dämmstoffmatte sind die Verbindungselemente in Form von kugelförmigen Partikeln 5 ausgebildet, die wie Kreuzungs- bzw. Gitterpunkte eines Raumgitters angeordnet sind. Gemäß der Fig. 2 sind die Verbindungselemente als dünne Fäden 6 ausgebildet, die wie vertikale Achsen der Gitterpunkte eines Raumgitters angeordnet sind. Die kugelförmigen Partikel 5 sind in definierten Reihenabständen in Längs- a und Querrichtung b des Vlies 2 sowie in der Höhe c, in vertikalen Abständen, angeordnet. Der Abstände a und b betragen jeweils ca. 50 mm und die Abstände c ca. 10 mm. Nach dem Austrag der Copolymer-Dispersion können sich jedoch die Partikel 5 in vertikaler Richtung geringfügig zueinander verschieben, so daß sie in der Regel nicht mehr ganz genau auf einer gemeinsamen vertikalen Achse liegen.
Die Fäden 6 sind nahezu senkrecht zur Kaschierung 3 und in definierten Abständen in Längs- a und Querrichtung b des Vlieses 2 angeordnet, wobei die Abstände a und b jeweils ca. 50 mm betragen.
Im Vergleich zu der in Fig. 1 gezeigten Dämmstoff-Matte besitzt die Dämmstoff-Matte gemäß der Fig. 2 eine verbesserte mechanische Stabilität und ein höheres elastisches Rückstellvermögen.
Die Dämmstoff-Matten werden nach folgender Verfahrensweise hergestellt.
An ihren Enden aufgespleißte technische Hanf-Fasern 1 mit einer Länge von 80 bis 130 mm und einer Dicke von 50 bis 120 µm werden gereinigt, wobei Fremdstoffe, Staub und Schäben entfernt werden. Anschließend werden die Hanf-Fasern in der Faservorbereitung über die Stufen Ballenöffnung, Dosieren, Vermischen, Feinöffnung der Vliesbildung zugeführt. Für die Vliesbildung stehen zwei Methoden zur Auswahl, das Krempeln und das aerodynamische Verfahren.
Die aerodynamische Vliesbildung ermöglicht ein Vlies, das in Längs- und Querrichtung gleiche Eigenschaften bezüglich Faserorientierung, Elastizität, Verformbarkeit und Festigkeit hat. Aufgrund des einschichtigen Aufbaues ist die Gefahr einer Florlagenspaltung nicht gegeben, die bei Krempel-Vlieslegern oft eintritt. Das Verfahren bietet wirtschaftliche Vorteile, die sich aus den Investitionskosten und Betriebskosten für die Anlage ergeben.
Wie in Fig. 3 gezeigt, wird die die untere Kaschierung bildende Papierbahn 3 von einer Vorratsrolle 16 abgewickelt und durchläuft eine Klebstoffauftragsvorrichtung, bestehend aus einem Abstreich-Giesser (Rakel) 18, einer Antragwalze 20 und einer Klebstoffzuführung mit einem Dosierventil 22, und wird auf der Oberseite mit Klebstoff 19 beschichtet. Der Weitertransport der klebstoffbeschichteten Papierbahn 3 erfolgt mittels Transportrollen 17. Über eine Vliesfördereinrichtung 23 wird das vorgefertigte Vlies 2 auf der klebstoffbeschichteten Papierbahn 3 abgelegt und verklebt mit dieser.

Die Papierbahn 3 mit dem Vlies 2 wird mit einer Geschwindigkeit von ca. 4 m/min in die durch einen Pfeil gekennzeichnete Transportrichtung bewegt.
Oberhalb des Vlieses 2 ist die Copolymer-Dispersions-Verteilereinrichtung 9 angeordnet. Die Verteilereinrichtung 9 ist mit nach unten gerichteten Düsennadeln 10 zum Austrag der Copolymer-Dispersion verbunden. Die einzelnen Düsennadeln 10 sind identisch ausgebildet und in einem Abstand von 50 mm zueinander in einer Reihe, quer zur Transportrichtung angeordnet. Der Verteiler 9 kann auch mit mehreren Düsennadel-Reihen ausgerüstet sein. Der Verteiler 9 ist über eine flexible Leitung 8 mit einem Beschickungsbehälter 7 für die Copolymer-Dispersion verbunden. Die Zufuhr der Copolymer-Dispersion kann durch ein in die Leitung 8 eingebundenes Stellventil 13 unterbrochen werden, wobei gleichzeitig mit der Absperrung der Dispersionszufuhr ein Vakuum angelegt wird. Hierzu ist die Leitung 8 mit einem Vakuumerzeuger 21 verbunden. Der Verteiler 9 und die Leitung 8 sind über eine Leitung 15 an ein Spülsystem 12 angeschlossen, mit dem die Leitung 8, der Verteiler 9 und die Düsennadeln 10 nach dem Abschalten der Anlage gereinigt werden können. Der Verteiler 9 ist auf einem Schlitten 14 montiert, der gleichzeitig in vertikaler und horizontaler Richtung bewegbar ist. Zum Eintrag der Copolymer-Dispersion in das Vlies 2 wird der Verteiler 9 mit der gleichen Geschwindigkeit wie das Vlies 2 in Transportrichtung des Vlieses 2 und nach unten bewegt, damit die Düsennadeln 10 in das Vlies 2 eintauchen. Ca. 5 mm vor Erreichen der Papierbahn 3 bzw. der Unterseite des Vlieses 2 wird die vertikale Abwärtsbewegung der Düsennadeln 10 gestoppt und über die programmierte zentrale Steuereinheit durch Öffnen des Stellventils 13 der Austrag der Copolymer-Dispersion ausgelöst. Mit Beginn des Austrags der Copolymer-Dispersion wird der sich in Vliestransportrichtung mitbewegende Verteiler 9 mit einer vorgegebenen Geschwindigkeit wieder nach oben bewegt und dadurch das Ziehen der dünnen Fäden 6 bewirkt. Ca. 5 mm vor Erreichen der Vliesoberseite der Düsennadelöffnungen 11 wird der Austrag der Copolymer-Dispersion durch die Betätigung des Stellventils 13 unterbrochen, wobei gleichzeitig mit dem Umschalten des Stellventils 13 durch den Vakuumerzeuger 21 ein Vakuum angelegt wird, damit noch in der Leitung 8 und im Verteiler 9 befindliche Copolymer-Dispersion nicht mehr ausgetragen wird. Haben die Düsennadeln 10 wieder die Position kurz oberhalb des Vlieses 2 erreicht, so wird die Bewegung des Verteilers 9 in Transportrichtung gestoppt und der Verteiler 9 wird wieder in entgegengesetzter Richtung zurück in die Ausgangslage bewegt, um mit einem neuen Zyklus zu beginnen. Die Eintauchbewegung der Düsennadeln 10 in das Vlies 2 dauert ca. 0,3 s. Zur Austragsdauer der Copolymer-Dispersion ist das Stellventil ca. 0,5 s geöffnet. Während der Austragsdauer werden aus jeder Düse 10 ca. 1,5 ml Copolymer-Dispersion zur Bildung eines Fadens 6 ausgetragen. Bei einer Transportgeschwindigkeit des Vlieses von 4 m/min dauert ein Zyklus ca. 1 s. Die einzelnen Fadenreihen in Querrichtung des Vlieses 2 werden in Abständen von ca. 50 mm gesetzt. Unmittelbar nach dem Austragen der Copolymer-Dispersion verbindet sich diese mit den in Berührungskontakt gelangenden Hanf-Faser-Kreuzungspunkten 4 und verfestigt sich. In der sich anschließenden Trocknungseinrichtung 24 wird das in der Copolymer-Dispersion noch enthaltene Wasser ausgetrieben und die Copolymer-Dispersion vulkanisiert zu einem Elastomer. Die zur Bildung der Fäden 6 eingesetzte Copolymer-Dispersion hat folgende Zusammensetzung: 40 Gew.-% Butadien, 20 Gew.-% Styrol, 40 Gew.-% Wasser und 10 Gew.-% leichte Soda, bezogen auf die Copolymer-Dispersionsmenge.
Die elastomeren Fäden 6 bilden eine dauerhaft feste Verbindung an den Hanf-Faser-Kreuzungspunkten 4. Die leichte Soda wirkt als flammhemmender Zusatz und als Mittel gegen Schädlingsbefall. Die so hergestellte Dämmstoffendlosbahn wird abschließend in der Trenn- und Besäumeinrichtung 25 besäumt, zu einzelnen Matten abgelängt und konfektioniert. Sofern gewünscht, kann die Oberseite des Vlieses 2 noch mit einer oberen Kaschierung versehen werden. Die Dämmstoff-Matten besitzen im Gebrauchszustand aufgrund der elastomeren Verbindungselemente ein großes Porenvolumen und dadurch besonders gute und dauerhafte Isoliereigenschaften. Die Entsorgung der mit einer biologisch abbaubaren Papierbahn kaschierten Dämmstoff-Matten kann durch Kompostierung erfolgen. Die elastomeren Verbindungselemente auf der Basis eines Butadien-Styrol-Copolymeren werden durch Mikroorganismen abgebaut.

## Patentansprüche

1. Dämmstoff-Matte bestehend aus in Wirr- oder Kreuzlage gebildetem Vlies aus Hanf-Fasern, einem Bindemittel und einer ein- oder beidseitigen Kaschierung, **dadurch gekennzeichnet, daß** die Hanf-Fasern (1) eine Länge von ca. 80 bis 130 mm und eine Dicke von 50 bis 120 µm aufweisen und an ihren Enden aufgespleißt sind, und in dem Vlies (2) in vertikalen Achsen der Gitterpunkte eines Raumgitters liegende Hanf-Faser-Kreuzungspunkte (4) und Hanf-Fasern mittels eines biologisch abbaubaren kautschukelastischen Copolymeren in Form von Verbindungselementen (5, 6) verbunden sind, und die Dämmstoff-Matte eine Dicke von mindestens 40 mm sowie eine Vliesdichte von 45 bis 60 kg/m³ besitzt.

2. Dämmstoff-Matte nach Anspruch 1, **dadurch gekennzeichnet, daß** die Verbindungselemente als Fäden (6) ausgebildet sind.

3. Dämmstoff-Matte nach Anspruch 2, **dadurch gekennzeichnet, daß** die Fäden (6) mit der unteren Kaschierung (3) verbunden sind.

4. Dämmstoff-Matte nach Anspruch 2, **dadurch gekennzeichnet, daß** die Fäden (6) nahezu gleichmäßig beabstandet zur Ober- und Unterseite des Vlieses (2) angeordnet sind.

5. Dämmstoff-Matte nach Anspruch 4, **dadurch gekennzeichnet, daß** der Abstand der Fäden (6) zur Ober- und Unterseite des Vlieses (2) jeweils ca. 5 mm beträgt.

6. Dämmstoff-Matte nach Anspruch 1, **dadurch gekennzeichnet, daß** die Verbindungselemente als in den Gitterpunkten liegende Partikel (5) ausgebildet und in vertikaler Richtung in gleichen Abständen (c) zueinander angeordnet sind.

7. Dämmstoff-Matte nach Anspruch 6, **dadurch gekennzeichnet, daß** die Partikel (5) kugelförmig ausgebildet sind.

8. Dämmstoff-Matte nach einem der Ansprüche 1 bis 7, **dadurch gekennzeichnet, daß** das kautschukelastische Copolymer aus einer vulkanisierbaren, wässrigen Copolymer-Dispersion besteht.

9. Dämmstoff-Matte nach einem der Ansprüche 1 bis 8, **dadurch gekennzeichnet, daß** das Copolymer aus den Komponenten Butadien und Styrol besteht.

10. Dämmstoff-Matte nach einem der Ansprüche 1 bis 9, **dadurch gekennzeichnet, daß** der Copolymer-Dispersion ein Flammschutzmittel und/oder ein Bakterizid und/oder Fungizid zugesetzt ist.

11. Dämmstoff-Matte nach einem der Ansprüche 1 bis 10, **dadurch gekennzeichnet, daß** die Kaschierung (3) aus einer biologisch abbaubaren Papierbahn besteht.

12. Verfahren zur Herstellung einer Dämmstoff-Matte nach mindestens einem der vorhergehenden Ansprüche durch folgende Verfahrensschritte:
a) als Ausgangsmaterial dienende, an ihren Enden aufgespleißte technische Hanf-Fasern (1) mit einer Länge von 80 bis 130 mm und einer Dicke von 50 bis 120 µm werden gereinigt, wobei Fremdstoffe, Staub und Schäben entfernt werden,
b) anschließend werden die Hanf-Fasern (1) durch mechanische oder aerodynamische Verwirbelung zu einem in Wirr- oder Kreuzlage bestehenden Vlies (2) mit einer Dicke von 40 bis 200 mm weiterverarbeitet und auf das gewünschte Breitenmaß zugeschnitten,
c) das Vlies (2) wird auf einer Kaschierung (3) abgelegt, und zusammen mit dieser in Transportrichtung bewegt,
d) mittels mindestens einer taktweise arbeitenden, oberhalb des Vlieses (2) angeordneten Copolymer-Dispersions-Verteilereinrichtung (9) mit mindestens in einer Reihe, quer zur Transportrichtung des Vlieses (2), vertikal nach unten gerichteten, in gleichem Abstand zueinander angeordneten Düsennadeln (10), die in das Vlies eintauchbar sind, werden Hanf-Faser-Kreuzungspunkte (4) und Hanf-Fasern durch Austrag einer definierten Copolymer-Dispersionsmenge verfestigt und
e) danach wird die Dämmstoffendlosbahn einer Trockeneinrichtung zugeführt, um das noch vorhandene Wasser aus der Copolymer-Dispersion zu entfernen, damit die eingetragene Copolymer-Dispersion zu einem Elastomer vulkanisiert, und abschließend besäumt, zu Matten geschnitten und konfektioniert.

13. Verfahren nach Anspruch 12, **dadurch gekennzeichnet, daß** die Copolymer-Dispersions-Verteilereinrichtung (9) nach unten bewegt wird und dabei die Düsennadeln (10) in das Vlies (2), bis kurz vor einer Berührung mit der Kaschierung (3), getaucht werden und der Austrag der Copolymer-Dispersion beginnt, die Copolymer-Dispersions-Verteilereinrichtung (9) wieder zurück in die Ausgangslage bewegt und dabei, wenn sich die Öffnungen der Düsennadeln (10) in der Stellung kurz vor Erreichen der Oberkante des Vlieses (2) befinden, der Austrag der Copolymer-Dispersion unterbrochen wird, und anschließend ein erneuter Zyklus zum Eintrag der Copolymer-Dispersion in den nachfolgenden Abschnitt des Vlieses (2) beginnt.

14. Verfahren nach einem der Ansprüche 12 oder 13, **dadurch gekennzeichnet, daß** die Copolymer-Dispersions-Verteilereinrichtung (9) mit Beginn der Bewegung zum Eintauchen der Düsennadeln (10) in das Vlies (2) mit der gleichen Geschwindigkeit wie das Vlies (2) in Transportrichtung des Vlieses (2) und nach dem Auftauchen aus dem Vlies (2) in eine Stellung oberhalb des Vlieses (2) wieder zurück in die Ausgangslage bewegt wird.

15. Verfahren nach einem der Ansprüche 12 bis 14, **dadurch gekennzeichnet, daß** zur Bildung von Fäden (6) als Verbindungselemente der Austrag der Copolymer-Dispersion aus den Düsennadeln (10) während der Bewegung der Düsennadeln (10) bis kurz vor Erreichen der Oberseite des Vlieses (2) aufrechterhalten wird.

16. Verfahren nach einem der Ansprüche 12 bis 14, **dadurch gekennzeichnet, daß** zur Bildung von Verfestigungspartikeln (5) als Verbindungselemente der Austrag der Copolymer-Dispersion aus den Düsennadeln (10) während der Bewegung der Düsennadeln (10) bis kurz vor Erreichen der Oberseite des Vlieses (2) mehrmals unterbrochen wird.

17. Verfahren nach einem der Ansprüche 12 bis 16, **dadurch gekennzeichnet, daß** zum Zeitpunkt, wenn sich die Öffnungen der Düsennadeln (10) in der Stellung kurz vor Erreichen der Oberseite des Vlieses (2) befinden, in der Copolymer-Dispersions-Verteilereinrichtung ein Vakuum erzeugt wird.

18. Verfahren nach einem der Ansprüche 12 bis 17, **dadurch gekennzeichnet, daß** zusammen mit der wässrigen Copolymerlösung ein flammhemmendes Mittel und/oder Bakterizid und/oder Fungizid in das Vlies (2) eingebracht wird.

19. Anlage zur Durchführung des Verfahren nach mindestens einem der Ansprüche 12 bis 18, bestehend aus einer Verwirbelungseinrichtung für die Vliesherstellung, einer Zuführeinrichtung (23) für das Vlies (2), einer Zuführeinrichtung (16) für die Kaschierung (3), einer Trocknungseinrichtung (24), einer Trenn -und Besäumeinrichtung (25) sowie mindestens einer Copolymer-Dispersions-Verteilereinrichtung (9) und einer zentralen Steuereinheit, wobei die Copolymer-Dispersions-Verteilereinrichtung (9) mit mehreren in einer oder in mehreren Reihen beabstandet angeordneten, in das Vlies (2) eintauchbaren Düsennadeln (10) zum Austrag der Copolymer-Dispersion verbunden und auf einem vertikal und horizontal beweglichen Schlitten (14) angeordnet ist und über ein Leitungssystem (8) mit einem Beschickungsbehälter (7) für die Copolymer-Dispersion in Verbindung steht und in das Leitungssystem (8) ein Vakuumerzeuger (21) eingebunden ist und ein Steuerventil (13) zur Unterbrechung der Zuführung der Copolymer-Dispersion zur Verteilereinrichtung (9) und an die Verteilereinrichtung (9) ein Spülsystem (15, 12) angeschlossen ist.

20. Anlage nach Anspruch 19, **dadurch gekennzeichnet, daß** eine Klebstoffauftragseinrichtung (17, 18) zur Beschichtung der Oberseite der Kaschierung (3) mit Klebstoff (19) angeordnet ist.

21. Anlage nach einem der Ansprüche 19 oder 20, **dadurch gekennzeichnet, daß** die einzelnen Düsennadeln (10) zueinander in einem Abstand von 40 bis 60 mm angeordnet sind.
